# EUROPEAN PATENT APPLICATION

(11) **EP 4 651 230 A1**
(43) Date of publication of application: **19.11.2025**
(21) Application number: 24809196.9
(22) Date of filing: 31.10.2024
(51) Int. Cl.: H01M 4/36

(54) **POSITIVE ELECTRODE MATERIAL AND PREPARATION METHOD THEREFOR, POSITIVE ELECTRODE SHEET, LITHIUM ION BATTERY, AND ELECTRIC DEVICE**

(30) Priority: 22.03.2024 CN 202410332260
(71) Applicant: Tianjin B&M Science And Technology Co., Ltd., Tianjin 300384 (CN)
(72) Inventor: LI, Haisheng, Tianjin 300384 (CN); ZHANG, Haitian, Tianjin 300384 (CN); TANG, Yanqun, Tianjin 300384 (CN); LV, Fei, Tianjin 300384 (CN); XU, Ning, Tianjin 300384 (CN)
(74) Representative: Meroni, Francesca
(86) International application number: PCT/CN2024/129080
(87) International publication number: WO 2025/194787

(57) **Abstract**

The present invention relates to the technical field of lithium-ion batteries, and specifically to a cathode material and a preparation method therefor, a cathode plate, a lithium-ion battery and an electric device. Particles of the cathode material has a core-shell structure, wherein the core-shell structure includes a nickel-rich inner core and a lithium-nickel-cobalt-manganese-oxide outer shell coated on a surface of the nickel-rich inner core, wherein a nickel element content in the nickel-rich inner core is higher than a nickel element content in the lithium-nickel-cobalt-manganese-oxide outer shell; and a cobalt element content and a manganese element content in the lithium-nickel-cobalt-manganese-oxide outer shell are higher than a cobalt element content and a manganese element content in the nickel-rich inner core, respectively. The high nickel content in the inner core of the cathode material can improve capacity; the high manganese element in the outer shell can improve safety and stability of the cathode material, the high cobalt element in the outer shell can improve first efficiency and rate performance of the cathode material, and thus a manganese-rich and cobalt-rich outer shell effectively improves cycle performance of the cathode material and reduces gas generation and heat release.

## Description

### CROSS-REFERENCE TO RELATED APPLICATION

The present application claims the priority to the Chinese patent application with the filing No. 202410332260.2 filed with the China National Intellectual Property Administration on March 22, 2024 and entitled "CATHODE MATERIAL AND PREPARATION METHOD THEREFOR, CATHODE PLATE, LITHIUM-ION BATTERY AND ELECTRIC DEVICE", the contents of which are incorporated herein by reference in entirety.

### TECHNICAL FIELD

The present invention relates to the technical field of lithium-ion batteries, and specifically to a cathode material and a preparation method therefor, a cathode plate, a lithium-ion battery and an electric device.

### BACKGROUND ART

Due to a high energy density, lithium-ion batteries are widely used in the fields of portable electronic products, household appliances, electric vehicles and energy storage. However, a high-nickel ternary cathode material has a problem that surface high-valence Ni is converted into halite phase during charging and discharging, so that cycle performance thereof rapidly declines.

In addition, in the prior art, a Mn source and a Co source are mixed by a solid phase method, as Mn diffuses slowly and solid phase mixing is non-uniform, Co usually can well diffuse and be coated to form a shell, but Mn has serious segregation.

In view of this, the present invention is specifically proposed.

### SUMMARY

The first objective of the present invention is to provide a cathode material, where an inner core of the cathode material has a high nickel element content, which can improve capacity; and an outer shell has high cobalt element and manganese element content, where the high manganese element content in the outer shell can improve safety and stability of the cathode material, the high cobalt element content in the outer shell can improve first efficiency and rate performance of the cathode material, and thus a manganese-rich and cobalt-rich outer shell effectively improves cycle performance of the cathode material and reduces gas generation and heat release, which solves the problems in the prior art that a cathode material with a surface rich in both cobalt and manganese cannot be made and that cycle performance of a high-nickel ternary cathode material rapidly declines due to conversion of surface high-valence Ni into halite phase during charging and discharging.

The second objective of the present invention is to provide a preparation method for a cathode material. In the present invention, based on difference in diffusion rates of Mn and Co elements in high-temperature roasting, a surface manganese-rich material is first formed through first roasting of a surface Mn-rich core-shell precursor, and then cobalt is coated through second roasting, so that a ternary core-shell cathode material with a surface rich in manganese and cobalt can be formed, where gradients of manganese element and cobalt element are controllable, and a process is simple, which not only solves the problem that a cathode material with a surface rich in both cobalt and manganese cannot be made, but also solves the problem that Mn has serious segregation due to slow diffusion.

The third objective of the present invention is to provide a cathode plate.

The fourth objective of the present invention is to provide a lithium-ion battery.

The fifth objective of the present invention is to provide an electric device.

In order to achieve the above objectives of the present invention, following technical solutions are particularly adopted.

The present invention first provides a cathode material, where particles of the cathode material have a core-shell structure, where the core-shell structure includes a nickel-rich inner core and a lithium-nickel-cobalt-manganese-oxide outer shell coated on a surface of the nickel-rich inner core.

In the above, a nickel element content in the nickel-rich inner core is higher than a nickel element content in the lithium-nickel-cobalt-manganese-oxide outer shell.

A cobalt element content and a manganese element content in the lithium-nickel-cobalt-manganese-oxide outer shell are higher than a cobalt element content and a manganese element content in the nickel-rich inner core, respectively.

The present invention further provides a preparation method for the cathode material, including following steps:
performing first mixing and first roasting on a core-shell precursor and a first lithium source, to obtain a surface manganese-rich material, where in the core-shell precursor, a nickel element content in a core layer is higher than a nickel element content in a shell layer, and a manganese element content in the core layer is lower than a manganese element content in the shell layer; and
performing second mixing and second roasting on the surface manganese-rich material and a cobalt source, to obtain the cathode material.

The present invention further provides a cathode plate, including the cathode material, or the cathode material obtained by the preparation method for the cathode material.

The present invention further provides a lithium-ion battery, including the cathode plate.

The present invention further provides an electric device, including the lithium-ion battery.

Compared with the prior art, the present invention has beneficial effects as follows.
(1) In the cathode material provided in the present invention, the inner core is rich in nickel, and the outer shell is rich in cobalt and manganese, where the nickel element with a high content in the inner core can improve the capacity; the outer shell has high cobalt element and manganese element contents, where the high manganese element content in the outer shell can improve safety and stability of the cathode material, the high cobalt element content in the outer shell can improve the first efficiency and rate performance of the cathode material, and thus the manganese-rich and cobalt-rich outer shell effectively improves the cycle performance of the cathode material and reduces gas generation and heat release.
(2) In the preparation method for a cathode material provided in the present invention, based on difference in diffusion rates of Mn and Co elements in high-temperature roasting, a surface manganese-rich material is first formed through the first roasting of the surface Mn-rich core-shell precursor, and then cobalt is coated through the second roasting, so that the ternary core-shell cathode material with the surface rich in manganese and cobalt can be formed, where the gradients of manganese element and cobalt element are controllable, and the process is simple.
(3) In the preparation method for a cathode material provided in the present invention, the cathode material is secondary particles, and in the preparation method, a cathode intermediate is formed through the first roasting, and the cobalt element subjected to the second roasting, due to a high diffusion rate, not only can diffuse inwards to form the core-shell structure on an outer layer of the secondary particles, but also can go deep into secondary particles along a crystal boundary to coat primary particles, thus enhancing interaction between the primary particles, and effectively inhibiting particle cracking and decomposition of an electrolytic solution at a cathode interface.

### BRIEF DESCRIPTION OF DRAWINGS

In order to more clearly illustrate technical solutions in embodiments of the present invention or in the prior art, drawings which need to be used in the description of the embodiments or the prior art will be briefly introduced below, and apparently, the drawings in the following description merely show some embodiments of the present invention, and the skilled in the art still could obtain other drawings in light of these drawings without using any inventive efforts.
FIG. 1 shows diagrams of element distribution of a section of a cathode material of Example 1 provided by the present invention;
FIG. 2 is a diagram of element quantitative analysis of a section of the cathode material of Example 1 provided by the present invention;
FIG. 3 shows diagrams of element distribution of a section of a cathode material of Comparative Example 1 provided by the present invention;
FIG. 4 is a diagram of element quantitative analysis of a section of the cathode material of Comparative Example 1 provided by the present invention;
FIG. 5 shows XRD data of the cathode material prepared in Example 1 provided by the present invention and Rietveld refinement results thereof; and
FIG. 6 is a chart of cycle performance test of lithium-ion batteries prepared with cathode materials of Example 2, Comparative Example 1 and Comparative Example 3 provided by the present invention.

### DETAILED DESCRIPTION OF EMBODIMENTS

Technical solutions of the present invention will be clearly and completely described below in conjunction with drawings and embodiments, while the skilled in the art would understand that the following embodiments described are some but not all embodiments of the present invention, and they are merely used for illustrating the present invention, but should not be considered as limitation to the scope of the present invention. Based on the embodiments in the present invention, all of other embodiments obtained by the skilled in the art without using any inventive efforts shall fall within the scope of protection of the present invention. Embodiments, for which no concrete conditions are specified, are performed according to conventional conditions or conditions recommended by manufactures. Where manufacturers of reagents or apparatuses used are not specified, they are conventional products commercially available.

If without special illustration, in the present invention, "first aspect, "second aspect, "third aspect", "fourth aspect" etc. are merely used for descriptive purpose, but should not be construed as indicating or implying importance in the relativity or quantity, or implicitly indicating importance or quantity of an indicated technical feature. Moreover, "first", "second", "third", "fourth" and the like are merely for the purpose of non-exhaustive enumeration and description, and should not be understood as constituting closed limitation to the quantity.

If without special illustration, terms "include (comprise)" and "contain" mentioned in the present invention are open-ended or close-ended. For example, the terms "include (comprise)" and "contain" can mean that other components that are not listed can also be included or contained, or only listed components can be included or contained.

If without special illustration, in the present invention, "one or more" or "at least one" refers to any one, any two, or any two or more of the listed items. In the above, "several" means any two or any two or more.

In the first aspect, the present invention provides a cathode material, where particles of the cathode material have a core-shell structure, where the core-shell structure includes a nickel-rich inner core, and a lithium-nickel-cobalt-manganese-oxide outer shell coated on a surface of the nickel-rich inner core.

In the above, a nickel element content in the nickel-rich inner core is higher than a nickel element content in the lithium-nickel-cobalt-manganese-oxide outer shell.

A cobalt element content and a manganese element content in the lithium-nickel-cobalt-manganese-oxide outer shell are higher than a cobalt element content and a manganese element content in the nickel-rich inner core, respectively. That is, the cobalt element content in the lithium-nickel-cobalt-manganese-oxide outer shell is higher than the cobalt element content in the nickel-rich inner core, and the manganese element content in the lithium-nickel-cobalt-manganese-oxide outer shell is higher than the manganese element content in the nickel-rich inner core.

In the cathode material provided in the present invention, the inner core is rich in nickel, and the outer shell is rich in cobalt and manganese, where the nickel element with a high content in the inner core can improve capacity; the outer shell has high cobalt element and manganese element contents, where the high manganese element content in the outer shell can improve safety and stability of the cathode material, and the high cobalt element content in the outer shell can improve the first efficiency and rate performance of the cathode material, and thus the manganese-rich and cobalt-rich outer shell effectively improves cycle performance of the cathode material and reduces gas generation and heat release. The present invention solves the problem in the prior art that it is difficult to realize that a cathode material has a surface rich in both manganese and cobalt.

In some specific embodiments, the nickel element content in the cathode material decreases in a gradient from a particle center to a particle surface. In the above, gradient decrease means that the nickel element content gradually decreases from the particle center to the particle surface.

In some specific embodiments, the cobalt element content in the cathode material increases in a gradient from a particle center to a particle surface. In the above, gradient increase means that the cobalt element content gradually increases from the particle center to the particle surface.

In some specific embodiments, the manganese element content in the cathode material increases in a gradient from a particle center to a particle surface. In the above, gradient increase means that the manganese element content gradually increases from the particle center to the particle surface.

In the above, gradient changes of various elements, especially the gradient change of Ni element, can relieve stress accumulation of the cathode material during charging and discharging, and reduce particle cracking and core-shell separation.

In some specific embodiments, in the cathode material, a difference between a mass fraction of nickel element at a particle center and a mass fraction of nickel element at a particle surface is ≥5%, including, but not limited to, a point value of any one of or a range value between any two of 5%, 6%, 7%, 8%, 9%, 10%, 11%, 12%, 13%, 14%, 15%, 16%, 18% and 20%. With such setting, the cathode material has a high nickel content in the interior so as to increase the high capacity, and has a low nickel content in the exterior so as to reduce surface side reactions, thus improving the safety performance and cycle lifetime of the cathode material.

In some specific embodiments, in the cathode material, a difference between a mass fraction of cobalt element at a particle surface and a mass fraction of cobalt element at a particle center is ≥2%, including, but not limited to, a point value of any one of or a range value between any two of 2%, 2.5%, 3%, 3.5%, 4%, 4.5%, 5%, 5.5%, 6%, 6.5%, 7% and 8%. Co element can improve conductivity of the cathode material, and surface Co enrichment is especially beneficial to improving electrochemical performances of the cathode material.

In some specific embodiments, in the cathode material, a difference between a mass fraction of manganese element at a particle surface and a mass fraction of manganese element at a particle center is ≥3%, including, but not limited to, a point value of any one of or a range value between any two of 3%, 3.5%, 4%, 4.5%, 5%, 5.5%, 6%, 6.5%, 7%, 8%, 8.5%, 9% and 10%. Mn can improve stability of the cathode material, and surface Mn enrichment is especially beneficial to improving safety performance and cycle performance of the cathode material.

In some specific embodiments, a diameter of the nickel-rich inner core is 4-16 µm, including, but not limited to, a point value of any one of or a range value between any two of 4 µm,5 µm, 6 µm, 8 µm, 10 µm, 12 µm, 15 µm and 16 µm.

In some specific embodiments, a thickness of the lithium-nickel-cobalt-manganese-oxide outer shell is 0.1-2 µm, including, but not limited to, a point value of any one of or a range value between any two of 0.1 µm, 0.2 µm, 0.5 µm, 0.8 µm, 1 µm, 1.3 µm, 1.5 µm, 1.8 µm and 2 µm.

In the cathode material provided in the present invention, the inner core has a large diameter, and the inner core accounts for a high mass proportion, which can ensure an overall sufficiently high Ni content and maintain capacity advantage of a high-nickel cathode.

In some specific embodiments, an average chemical formula of the nickel-rich inner core is LiNiₓCo_{y}Mn_{1-x-y}O₂, where 0.5<x<1, 0<y<0.5, and x+y<1, and where x includes, but is not limited to, a point value of any one of or a range value between any two of 0.51, 0.53, 0.55, 0.58, 0.6, 0.7, 0.8, 0.9, 0.95 and 0.98; and y includes, but is not limited to, a point value of any one of or a range value between any two 0.001, 0.01, 0.03, 0.05, 0.08, 0.1, 0.2, 0.3, 0.4, 0.45 and 0.49.

An average chemical formula of the lithium-nickel-cobalt-manganese-oxide outer shell is LiNiₐCo_{b}Mn_{1-a-b}O₂, where 0<a<x, 1>b>y, and 1-a-b>1-x-y.

In some specific embodiments, microstrain of the cathode material is ≥0.05%, including, but not limited to, a point value of any one of or a range value between any two of 0.05%, 0.052%, 0.055%, 0.058%, 0.06%, 0.063%, 0.065%, 0.068% and 0.7%.

The cathode material provided by the present invention has higher microstrain, indicating that the cathode material has a core-shell structure.

In some specific embodiments, a first discharge specific capacity of a lithium-ion battery containing the cathode material is ≥228 mAh/g, including, but not limited to, a point value of any one of or a range value between any two of 228 mAh/g, 229 mAh/g, 230 mAh/g, 231 mAh/g, 232 mAh/g, 233 mAh/g and 235 mAh/g.

In some specific embodiments, first Coulombic efficiency of a lithium-ion battery containing the cathode material is ≥90%, including, but not limited to, a point value of any one of or a range value between any two of 90%, 91%, 92%, 93%, 94%, 95% and 96%.

In some specific embodiments, a capacity retention rate of a lithium-ion battery containing the cathode material after 100 cycles is ≥91.5%, including, but not limited to, a point value of any one of or a range value between any two of 91.5%, 91.9%, 92%, 92.5%, 92.8%, 93%, 93.6%, 94%, 95% and 96%.

In the second aspect, the present invention provides a preparation method for the above cathode material, including following steps.

First mixing and first roasting are performed in sequence on a core-shell precursor and a first lithium source, and then cooling is performed, to obtain a surface manganese-rich material.

In the above, in the core-shell precursor, a nickel element content in a core layer is higher than a nickel element content in a shell layer, and a manganese element content in the core layer is lower than a manganese element content in the shell layer.

In some specific embodiments, in the core-shell precursor, a cobalt element content in the core layer is not higher than a cobalt element content in the shell layer. Specifically, the core layer and the shell layer may neither contain the cobalt element, and in this case, the cobalt element contents in the core layer and in the shell layer are equal, both being 0. When the core layer and the shell layer both contain the cobalt element, the cobalt element content in the core layer is lower than that in the shell layer.

Second mixing and second roasting are performed in sequence on the surface manganese-rich material and a cobalt source, and then cooling is performed, to obtain the cathode material.

In the present invention, based on a difference in diffusion rates of Co and Mn elements, a gradient of Mn is formed in the core-shell precursor and is retained in the first roasting, and a gradient of Co is formed in the second roasting, so that the gradients of Mn and Co are effectively maintained, and advantages of a core-shell structure of the cathode material are brought into full play, which not only solves the problem that a cathode material with a surface rich in both cobalt and manganese cannot be made, but also solves the problem that Mn has serious segregation due to slow diffusion.

A lithium-ion battery manufactured with the cathode material prepared by this method has advantages such as high capacity, high first efficiency (i.e. first Coulombic efficiency), and good cycle performance.

In some specific embodiments, an average chemical formula of the core layer of the core-shell precursor is NiₚCo_{q}Mn_{1-p-q}(OH)₂, where 0.5<p<1, 0≤q<0.5, and p+q<1, where p includes, but is not limited to, a point value of any one of or a range value between any two of 0.51, 0.53, 0.55, 0.58, 0.6, 0.7, 0.8, 0.9, 0.95 and 0.98; and q includes, but is not limited to, a point value of any one of or a range value between any two of 0, 0.001, 0.01, 0.03, 0.05, 0.08, 0.1, 0.2, 0.3, 0.4, 0.45 and 0.49.

An average chemical formula of the shell layer of the core-shell precursor is Ni_{w}CoₛMn_{1-w-s}(OH)₂, where 0<w<p, 1>s≥q, and 1-w-s>1-p-q.

In the present invention, the precursor with a surface rich in Mn is used, and the rich Mn on the surface can be retained in the first roasting, so as to form an intermediate material with a surface rich in manganese. The gradient of Co can be formed in the second roasting. Gradient concentrations of Mn element and Co element can be effectively maintained.

In some specific embodiments, a diameter of the core layer of the core-shell precursor is 4-16 µm, including, but not limited to, a point value of any one of or a range value between any two of 4 µm, 5 µm, 6 µm, 8 µm, 10 µm, 12 µm, 15 µm and 16 µm.

A thickness of the shell layer of the core-shell precursor is 0.1-2 µm, including, but not limited to, a point value of any one of or a range value between any two of 0.1 µm, 0.2 µm, 0.5 µm, 0.8 µm, 1 µm, 1.3 µm, 1.5 µm, 1.8 µm and 2 µm.

In some specific embodiments, a volume median particle size D₅₀ of the core-shell precursor is 4-18 µm, including, but not limited to, a point value of any one of or a range value between any two of 4 µm, 5 µm, 6 µm, 8 µm, 10 µm, 12 µm, 13 µm, 15 µm, 16µm and 18 µm.

By using the core-shell precursor with the above particle size D₅₀, both high rate performance and high compaction density can be obtained.

In some specific embodiments, a specific surface area of the core-shell precursor is 4-20 m²/g, including, but not limited to, a point value of any one of or a range value between any two of 4 m²/g, 5 m²/g, 8 m²/g, 10 m²/g, 13 m²/g, 15 m²/g, 18 m²/g and 20 m²/g.

The specific surface area of the core-shell precursor is within the above range, which is beneficial to control morphology of the precursor, thus ensuring effective synthesis of the cathode material.

In some specific embodiments, a tap density of the core-shell precursor is 1.9-2.1 g/cm³, including, but not limited to, a point value of any one of or a range value between any two of 1.9 g/cm³, 1.95/cm³, 2.0/cm³, 2.05/cm³, 2.1 g/cm³.

The tap density of the core-shell precursor is within the above range, which can increase the compaction density of the cathode material prepared thereby, thus improving a volumetric energy density of a lithium battery obtained assembling.

In some specific embodiments, the core-shell precursor has a radial distribution characteristic, which is beneficial to reduce strain and improve lithium ion transport performance. In the above, the radial distribution refers to radial arrangement of primary particles from a center of sphere to a spherical surface, and in this way, a lithium ion transmission path can be optimized, and kinetic performance thereof is remarkably improved; meanwhile, a radial distribution structure can effectively dissipate stress, and can effectively alleviate particle cracking caused by volumeric change of a high-nickel or ultra-high-nickel material, and effectively improve cycle performance.

In some specific embodiments, a molar ratio of lithium element in the core-shell precursor to that in the first lithium source is 1:(1-1.07), including, but not limited to a point value of any one of or a range value between any two of 1:1, 1:1.01, 1:1.02, 1:1.03, 1:1.04, 1:1.05, 1:1.06 and 1: 1.07.

In some specific embodiments, the first roasting includes two-stage calcination.

Compared with one-stage calcination, in the two-stage calcination, a low-temperature heat preservation platform is added, which platform facilitates sufficient mixing and diffusion of lithium salt in the precursor, and improves reaction uniformity. If the temperature is directly raised to a high-temperature stage, that is, the conventional one-stage calcination is used, local lithium enrichment or lithium depletion may occur.

In the above, a temperature of first-step calcination in the two-stage calcination is 300-600 °C, including, but not limited to, a point value of any one of or a range value between any two of 300 °C, 350 °C, 400 °C, 450 °C, 500 °C, 550 °C and 600 °C; and a heat preservation duration of the first-step calcination is ≥2h, including, but not limited to, a point value of any one of or a range value between any two of 3 h, 4 h, 5 h, 6 h, 7 h, 8 h, 9 h, 10 h, 12 h, 15 h, 20 h and 24 h, preferably the heat preservation duration is 3-9 h.

In some specific embodiments, a heating-up rate of the first-step calcination in the two-stage calcination is 1-6 °C/min, including, but not limited to, a point value of any one of or a range value between any two of 1 °C/min, 2 °C/min, 3 °C/min, 4 °C/min, 5 °C/min and 6 °C/min.

A temperature of second-step calcination of the two-stage calcination is 650-850 °C, including, but not limited to, a point value of any one of or a range value between any two of 650 °C, 700 °C, 750 °C, 800 °C and 850 °C; and a heat preservation duration of the second-step calcination is ≥4 h, including, but not limited to, a point value of any one of or a range value between any two of 4 h, 5 h, 8 h, 10 h, 12 h, 15 h, 18 h, 20 h, 24 h and 30 h, preferably the heat preservation duration is 4-20 h.

In some specific embodiments, a heating-up rate of the second-step calcination in the two-stage calcination is 1-6 °C/min, including, but not limited to, a point value of any one of or a range value between any two of 1 °C/min, 2 °C/min, 3 °C/min, 4 °C/min, 5 °C/min and 6 °C/min.

In some specific embodiments, a second lithium source is further added during the second mixing, and a molar ratio of the surface manganese-rich material, the cobalt element in the cobalt source and the lithium element in the second lithium source is 1:(0.002-0.06):(0.0001-0.12).

In the above, a purpose of adding the second lithium source in the second mixing is to supplement lithium, thus avoiding a low ratio of Li: NCM which deteriorates electrochemical performances.

In some specific embodiments, a temperature of a second roasting is 500-800 °C, including, but not limited to, a point value of any one of or a range value between any two of 500 °C, 550 °C, 600 °C, 650 °C, 700 °C, 750 °C and 800 °C; and a heat preservation duration of the second roasting is ≥2 h, including, but not limited to, a point value of any one of or a range value between any two of 2 h, 3 h, 5 h, 8 h, 10 h, 12 h, 15 h, 16 h, 18 h, 20 h and 24 h, preferably the heat preservation duration is 2-26 h.

The second roasting uses the above temperature range, which facilitates controlling element diffusion, thus ensuring that the core and the shell have a sufficient concentration difference.

In some specific embodiments, a heating-up rate of the second roasting is 1-6 °C/min, including, but not limited to, a point value of any one of or a range value between any two of 1 °C/min, 2 °C/min, 3 °C/min, 4 °C/min, 5 °C/min and 6 °C/min.

In some specific embodiments, the first roasting and the second roasting are performed in an oxygen atmosphere, and preferably, an inlet rate of oxygen is 100-400 L/min, including, but not limited to, a point value of any one of or a range value between any two of 100 L/min, 200 L/min, 300 L/min and 400 L/min.

In some specific embodiments, the cobalt source includes a compound containing cobalt element, including, but not limited to, one or more of oxides, hydroxides, oxyhydroxides, nitrates and acetates of cobalt.

In some specific embodiments, the first lithium source and/or the second lithium source include any common lithium-containing compound in the art, for example, one or more of LiOH, Li₂CO₃, Li₂SO₄, LiCl, and LiNO₃, but are not limited thereto.

In the third aspect, the present invention provides a cathode plate, including the above cathode material, or a cathode material prepared by the above preparation method for a cathode material.

A lithium-ion battery manufactured with this cathode plate has advantages such as high capacity, high first Coulombic efficiency and good cycle performance.

In some specific embodiments, the cathode plate includes a current collector and a cathode active layer provided on the current collector.

In some specific embodiments, the current collector includes, but is not limited to, aluminum foil.

In some specific embodiments, in addition to the above cathode material, the cathode active layer further includes at least one of a binder and a conductive agent.

In the above, the binder includes any binding material commonly used in the art, for example, at least one of polyvinylidene fluoride, polytetrafluoroethylene, sodium carboxymethyl cellulose, styrene-butadiene rubber and aqueous adhesive, but is not limited thereto.

The conductive agent includes any conductive material commonly used in the art, for example, at least one of conductive graphite, acetylene black, carbon nanotube, nanosized powder and graphene, but is not limited thereto.

In some specific embodiments, the conductive carbon black includes at least one of conductive carbon black SP (super p), acetylene black (AB) and Ketjen black (KB), but is not limited thereto.

In the fourth aspect, the present invention provides a lithium-ion battery, including the above cathode plate.

The lithium-ion battery has excellent electrochemical performances, and not only has a high capacity, but also has high first efficiency and excellent cycle performance.

In some specific embodiments, in addition to the above cathode plate, the lithium-ion battery further includes at least one of an anode plate, a separator and an electrolytic solution.

In the above, the anode plate, the separator and the electrolytic solution may be any commercially available anode plate, separator and electrolytic solution, or may be anode plate, separator and electrolytic solution manufactured according to any prior art, which is not limited in the present invention.

In the fifth aspect, the present invention provides an electric device, including the above lithium-ion battery.

In the above, the electric device includes any apparatus, device or system including the above lithium-ion battery.

The electric device containing the above lithium-ion battery may be widely applied to various fields, such as the field of transportation means, the field of electronic products, the astronautic field, the medical field and the field of energy storage, but is not limited thereto.

As an example, the above electric device includes electric vehicle, electric motorcycle, electric bicycle, electric tool, starting power supply, energy storage system, electronic product, household appliance, and office equipment, but is not limited thereto.

Embodiments of the present invention will be described in detail below in combination with examples, while the skilled in the art would understand that the following examples are merely used for illustrating the present invention, but should not be considered as limitation to the scope of the present invention. Examples, for which no concrete conditions are specified, are carried out according to conventional conditions or conditions recommended by manufactures. If manufacturers of reagents or apparatuses used are not specified, all of them are conventional products commercially available.

### Example 1

A preparation method for a cathode material provided in the present example included following steps.
(1) A spherical core-shell precursor (purchased, manufactured by Huayou Cobalt Co., Ltd.) with an overall molar ratio of Ni element : Mn element = 94.7:5.3 was obtained, where an average chemical formula thereof was Ni_{0.947}Mn_{0.053}(OH)₂, a volume median particle size D₅₀ thereof was 10 µm, a specific surface area was 12.5 m²/g, a tap density was 1.95 g/cm³, a diameter of an inner core thereof was 9.6 µm, an average chemical formula of the inner core was Ni_{0.986}Mn_{0.014}(OH)₂, a thickness of a shell layer thereof was 0.2 µm, and an average chemical formula of the shell layer was Ni_{0.65}Mn_{0.35}(OH)₂.
   LiOH and the above core-shell precursor Ni_{0.947}Mn_{0.053}(OH)₂ were prepared in a molar ratio of 1.03:1, and uniformly mixed by a high-speed mixer at a rotational speed of 900 r/min. After mixing for 20 min, material hanging on an inner wall of the high-speed mixer was scraped off, and then mixing was further performed for 20 min to obtain a mixture.
(2) The mixture obtained in step (1) was roasted at 600 °C for 2 h (i.e., first-step calcination), then was taken out and stirred and mixed uniformly by the high-speed mixer at a rotational speed of 900 r/min. After stirring for 20 min, roasting was performed at 770 °C for 12 h (i.e., second-step calcination) to obtain a roasted product. During the above roasting, a heating-up rate was 2.5 °C/min, an atmosphere was oxygen, and an oxygen inlet rate was 200 L/min.
   The above roasted product was crushed and sieved to obtain an intermediate material with a surface rich in manganese and an average chemical formula of LiNi_{0.947}Mn_{0.053}O₂.
(3) The intermediate material obtained in step (2), Co(OH)₂ and LiOH were prepared in a molar ratio of 1:0.05:0.05, and uniformly mixed by the high-speed mixer at a rotational speed of 900 r/min. After mixing for 20 min, the material hanging on the inner wall of the high-speed mixer was scraped off, and then mixing was further performed for 20 min to obtain a mixed material. The mixed material was roasted at 720 °C for 8 h (i.e. second roasting), where a heating-up rate was 2.5 °C/min, an atmosphere was oxygen, and an oxygen inlet rate was 200 L/min. After cooling, an obtained roasted product was crushed and sieved to obtain a cathode material with an average chemical formula of LiNi_{0.90}Co_{0.05}Mn_{0.05}O₂.

Particles of the cathode material prepared in the present example had a core-shell structure, where the core-shell structure included a nickel-rich inner core and a lithium-nickel-cobalt-manganese-oxide outer shell coated on a surface of the nickel-rich inner core. A nickel element content in the cathode material decreased in a gradient from a particle center to a particle surface; a cobalt element content in the cathode material increased in a gradient from the particle center to the particle surface; and a manganese element content in the cathode material increased in a gradient from the particle center to the particle surface. A diameter of the nickel-rich inner core was 9.2 µm, and a thickness of the lithium-nickel-cobalt-manganese-oxide outer shell was 0.3 µm. An average chemical formula of the nickel-rich inner core was LiNi_{0.926}Co_{0.040}Mn_{0.034}O₂, and an average chemical formula of the lithium-nickel-cobalt-manganese-oxide outer shell was LiNi_{0.811}Co_{0.084}Mn_{0.105}O₂.

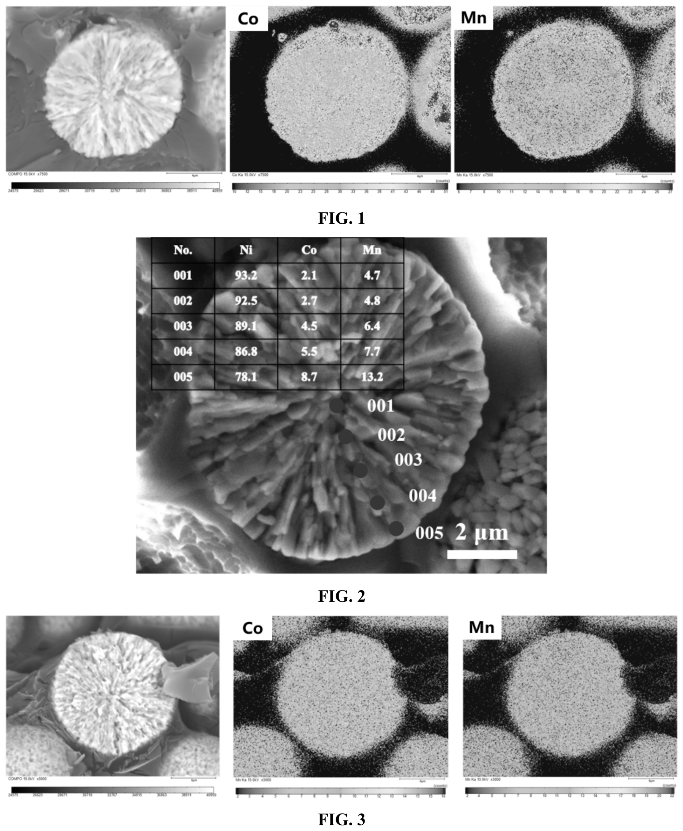

Element distribution analysis was performed on a section of the above cathode material through an electron probe micro analysis (EPMA) technology, and results are as shown in FIG. 1. It can be seen that Mn element and Co element are enriched on the particle surface.

Element quantitative analysis was performed on the section of the above cathode material by an energy dispersive spectrometer (EDS), and results are as shown in FIG. 2. It can be seen that the Mn element and the Co element are distributed in a gradient from the particle center to the particle surface, and concentration is high in the exterior and low in the interior.

### Example 2

A preparation method for a cathode material provided in the present example included following steps.
(1) A spherical core-shell precursor (purchased, manufactured by Huayou Cobalt Co., Ltd.) with an overall molar ratio of Ni element: Co element: Mn element = 91.4:3.55:5.05 was obtained, where an average chemical formula thereof was Ni_{0.914}Co_{0.0355}Mn_{0.0505}(OH)₂, a volume median particle size D₅₀ thereof was 10 µm, a specific surface area was 11.3 m²/g, a tap density was 2.01 g/cm³, a diameter of an inner core thereof was 9.5 µm, an average chemical formula of the inner core was Ni_{0.9484}Co_{0.0355}Mn_{0.0161}(OH)₂, a thickness of a shell layer thereof was 0.25 µm, and an average chemical formula of the shell layer was Ni_{0.653}Co_{0.0325}Mn_{0.3145}(OH)₂.
   LiOH and the above core-shell precursor Ni_{0.914}Co_{0.0355}Mn_{0.0505}(OH)₂ were prepared in a molar ratio of 1.02:1, and uniformly mixed by a high-speed mixer at a rotational speed of 900 r/min. After mixing for 20 min, material hanging on an inner wall of the high-speed mixer was scraped off, and then mixing was further performed for 20 min to obtain a mixture.
(2) The mixture obtained in step (1) was roasted at 550 °C for 3 h (i.e., first-step calcination), then was taken out and stirred and mixed uniformly by the high-speed mixer at a rotational speed of 900 r/min. After stirring for 20 min, roasting was performed at 760 °C for 12 h (i.e., second-step calcination) to obtain a roasted product. During the above roasting, a heating-up rate was 2.5 °C/min, an atmosphere was oxygen, and an oxygen inlet rate was 200 L/min.
   The above roasted product was crushed and sieved to obtain an intermediate material with a surface rich in manganese and an average chemical formula of Ni_{0.914}Co_{0.0355}Mn_{0.0505}(OH)₂.
(3) The intermediate material obtained in step (2), CoO(OH) and LiOH were prepared in a molar ratio of 1:0.015:0.01, and uniformly mixed by the high-speed mixer at a rotational speed of 900 r/min. After mixing for 20 min, the material hanging on the inner wall of the high-speed mixer was scraped off, and then mixing was further performed for 20 min to obtain a mixed material. The mixed material was roasted at 700 °C for 5 h (i.e. second roasting), where a heating-up rate was 2.5 °C/min, an atmosphere was oxygen, and an oxygen inlet rate was 200 L/min. After cooling, an obtained roasted product was crushed and sieved to obtain a cathode material with an average chemical formula of LiNi_{0.90}Co_{0.05}Mn_{0.05}O₂.

Particles of the cathode material prepared in the present example had a core-shell structure, where the core-shell structure included a nickel-rich inner core and a lithium-nickel-cobalt-manganese-oxide outer shell coated on a surface of the nickel-rich inner core. A nickel element content in the cathode material decreased in a gradient from a particle center to a particle surface; a cobalt element content in the cathode material increased in a gradient from the particle center to the particle surface; and a manganese element content in the cathode material increased in a gradient from the particle center to the particle surface. A diameter of the nickel-rich inner core was 9.3 µm, and a thickness of the lithium-nickel-cobalt-manganese-oxide outer shell was 0.35 µm. An average chemical formula of the nickel-rich inner core was LiNi_{0.912}Co_{0.046}Mn_{0.042}O₂, and an average chemical formula of the lithium-nickel-cobalt-manganese-oxide outer shell was LiNi_{0.826}Co_{0.076}Mn_{0.098}O.

### Example 3

A preparation method for a cathode material provided in the present example included following steps.
(1) A spherical core-shell precursor (purchased, manufactured by Huayou Cobalt Co., Ltd.) with an overall molar ratio of Ni element : Co element : Mn element = 90.9:4.04:5.06 was obtained, where an average chemical formula thereof was Ni_{0.909}Co_{0.0404}Mn_{0.0506}(OH)₂, a volume median particle size D₅₀ thereof was 11 µm, a specific surface area was 10.9 m²/g, a tap density was 1.97 g/cm³, a diameter of an inner core thereof was 9.8 µm, an average chemical formula of the inner core was Ni_{0.9451}Co_{0.0538}Mn_{0.0011}(OH)₂, a thickness of a shell layer thereof was 0.6 µm, and an average chemical formula of the shell layer was Ni_{0.8}Mn_{0.2}(OH)₂.
   LiOH and the above core-shell precursor Ni_{0.909}Co_{0.0404}Mn_{0.0506}(OH)₂ were prepared in a molar ratio of 1.04:1, and uniformly mixed by a high-speed mixer at a rotational speed of 900 r/min. After mixing for 20 min, material hanging on an inner wall of the high-speed mixer was scraped off, and then mixing was further performed for 20 min to obtain a mixture.
(2) The mixture obtained in step (1) was roasted at 600 °C for 2 h (i.e., first-step calcination), then was taken out and stirred and mixed uniformly by the high-speed mixer at a rotational speed of 900 r/min. After stirring for 20 min, roasting was performed at 755 °C for 14 h (i.e., second-step calcination) to obtain a roasted product. During the above roasting, a heating-up rate was 2.5 °C/min, an atmosphere was oxygen, and an oxygen inlet rate was 200 L/min.
   The above roasted product was crushed and sieved to obtain an intermediate material with a surface rich in manganese and an average chemical formula of LiNi_{0.909}Co_{0.0404}Mn_{0.0506}O₂.
(3) The intermediate material obtained in step (2) and Co(OH)₂ were prepared in a molar ratio of 1:0.01, and uniformly mixed by the high-speed mixer at a rotational speed of 900 r/min. After mixing for 20 min, the material hanging on the inner wall of the high-speed mixer was scraped off, and then mixing was further performed for 20 min to obtain a mixed material. The mixed material was roasted at 650 °C for 6 h (i.e. second roasting), where a heating-up rate was 2.5 °C/min, an atmosphere was oxygen, and an oxygen inlet rate was 200 L/min. After cooling, an obtained roasted product was crushed and sieved to obtain a cathode material with an average chemical formula of LiNi_{0.90}Co_{0.05}Mn_{0.05}O₂.

Particles of the cathode material prepared in the present example had a core-shell structure, where the core-shell structure included a nickel-rich inner core and a lithium-nickel-cobalt-manganese-oxide outer shell coated on a surface of the nickel-rich inner core. A nickel element content in the cathode material decreased in a gradient from a particle center to a particle surface; a cobalt element content in the cathode material increased in a gradient from the particle center to the particle surface; and a manganese element content in the cathode material increased in a gradient from the particle center to the particle surface. A diameter of the nickel-rich inner core was 9.6 µm, and a thickness of the lithium-nickel-cobalt-manganese-oxide outer shell was 0.6 µm.An average chemical formula of the nickel-rich inner core was LiNi_{0.92}Co_{0.044}Mn_{0.036}O₂, and an average chemical formula of the lithium-nickel-cobalt-manganese-oxide outer shell was LiNi_{0.851}Co_{0.065}Mn_{0.084}O₂.

### Example 4

A preparation method for a cathode material provided in the present example was substantially the same as that in Example 3, but was different in that in step (3), the molar ratio of the intermediate material obtained in step (2) to Co(OH)₂ was changed into 1:0.03.

### Example 5

A preparation method for a cathode material provided in the present example was substantially the same as that in Example 3, but was different in that in step (2), the temperature and duration of the first-step calcination were substituted by roasting at 400 °C for 6 h, and the temperature and duration of the second-step calcination were substituted by roasting at 680 °C for 16 h.

### Example 6

A preparation method for a cathode material provided in the present example was substantially the same as that in Example 3, but was different in that the temperature and duration of the second roasting in step (3) were substituted by roasting at 550 °C for 8 h.

### Comparative Example 1

A preparation method for a cathode material with uniformly distributed Ni, Co and Mn provided in the present comparative example included steps as follows.
(1) A spherical precursor Ni_{0.90}Co_{0.05}Mn_{0.05}(OH)₂ with a molar ratio of Ni element: Co element: Mn element = 90:5:5 was obtained, where a volume median particle size D₅₀ thereof was 10 µm, a specific surface area was 9.7 m²/g, and a tap density was 2.06 g/cm³.
   LiOH and the precursor Ni_{0.90}Co_{0.05}Mn_{0.05}(OH)₂ were prepared in a molar ratio of 1.02:1, and uniformly mixed by a high-speed mixer at a rotational speed of 900 r/min. After mixing for 20 min, material hanging on an inner wall of the high-speed mixer was scraped off, and then mixing was further performed for 20 min to obtain a mixture.
(2) The mixture obtained in step (1) was roasted at 600 °C for 2 h, then was taken out and stirred and mixed uniformly by the high-speed mixer at a rotational speed of 900 r/min. After stirring for 20 min, roasting was performed at 770 °C for 12 h to obtain a roasted product. During the above roasting, a heating-up rate was 2.5 °C/min, an atmosphere was oxygen, and an oxygen inlet rate was 200 L/min. The roasted product was crushed and sieved to obtain a cathode material LiNi_{0.90}Mn_{0.05}Co_{0.05}O₂.

Element distribution analysis was performed on a section of the cathode material through an electron probe micro analysis (EPMA) technology, and results are as shown in FIG. 3. It can be seen that Ni, Co, and Mn elements are all uniformly distributed.

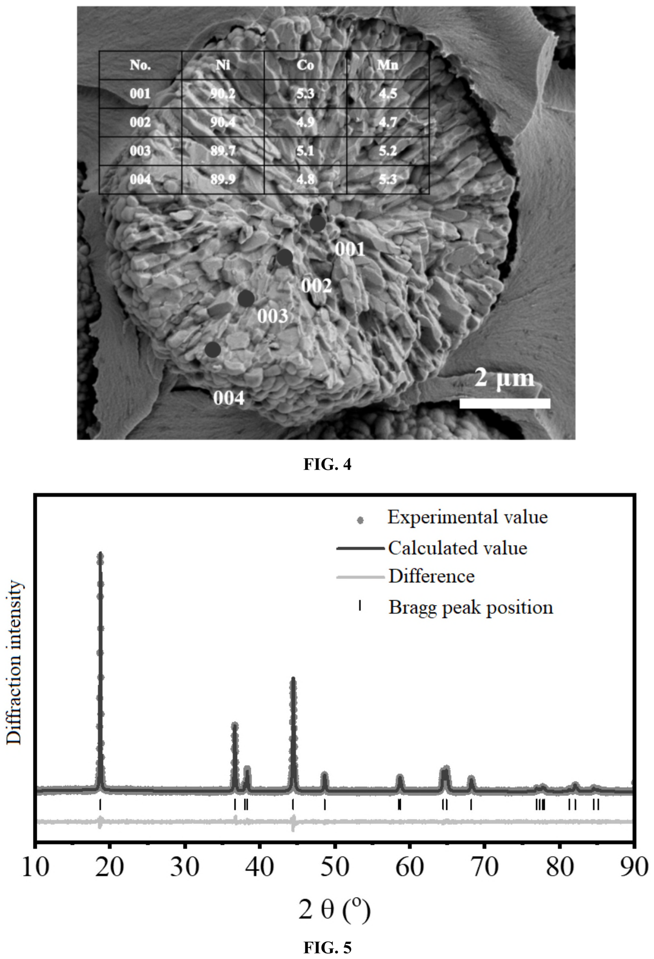

Element quantitative analysis was performed on the section of the above cathode material by an energy dispersive spectrometer (EDS), and results are as shown in FIG. 4. It can be seen that the Ni, Co, and Mn elements are all uniformly distributed.

### Comparative Example 2

A preparation method for a cathode material provided in the present comparative example included steps as follows.
(1) A spherical precursor (purchased, manufactured by Huayou Cobalt Co., Ltd.) with an overall molar ratio of Ni element: Co element: Mn element = 90:5:5 was obtained, where an average chemical formula thereof was Ni_{0.90}Co_{0.05}Mn_{0.05}(OH)₂, a volume median particle size D₅₀ thereof was 10 µm, a specific surface area was 10.7 m²/g, a tap density was 2.01 g/cm³, a diameter of an inner core thereof was 9 µm, an average chemical formula of the inner core was Ni_{0.974}Co_{0.013}Mn_{0.013}(OH)₂, a thickness of a shell layer thereof was 0.5 µm, and an average chemical formula of the shell layer was Ni_{0.70}Co_{0.15}Mn_{0.15}(OH)₂.
   LiOH and the above core-shell precursor Ni_{0.90}Co_{0.05}Mn_{0.05}(OH)₂ were prepared in a molar ratio of 1.02:1, and uniformly mixed by a high-speed mixer at a rotational speed of 900 r/min. After mixing for 20 min, material hanging on an inner wall of the high-speed mixer was scraped off, and then mixing was further performed for 20 min to obtain a mixture.
(2) The mixture obtained in step (1) was roasted at 600 °C for 2 h, then was taken out and stirred and mixed uniformly by the high-speed mixer at a rotational speed of 900 r/min. After stirring for 20 min, roasting was performed at 770 °C for 12 h to obtain a roasted product. During the above roasting, a heating-up rate was 2.5 °C/min, an atmosphere was oxygen, and an oxygen inlet rate was 200 L/min.

The above roasted product was crushed and sieved to obtain the cathode material LiNi_{0.90}Co_{0.05}Mn_{0.05}O₂.

### Comparative Example 3

A preparation method for a cathode material provided in the present comparative example included steps as follows.
(1) A spherical precursor Ni_{0.938}Co_{0.031}Mn_{0.031}(OH)₂ in a molar ratio of Ni element: Co element: Mn element = 93.8:3.1:3.1 was obtained, where a volume median particle size D₅₀ thereof was 10 µm, a specific surface area was 10.3 m²/g, and a tap density was 1.98 g/cm³.
   LiOH and the precursor Ni_{0.938}Co_{0.031}Mn_{0.031}(OH)₂ were prepared in a molar ratio of 1.02:1, and uniformly mixed by a high-speed mixer at a rotational speed of 900 r/min. After mixing for 20 min, material hanging on an inner wall of the high-speed mixer was scraped off, and then mixing was further performed for 20 min to obtain a mixture.
(2) The mixture obtained in step (1) was roasted at 550 °C for 4 h, then was taken out and stirred and mixed uniformly by the high-speed mixer at a rotational speed of 900 r/min. After stirring for 20 min, roasting was performed at 740 °C for 12 h to obtain a roasted product. During the above roasting, a heating-up rate was 2.5 °C/min, an atmosphere was oxygen, and an oxygen inlet rate was 200 L/min.
   The above roasted product was crushed and sieved to obtain an intermediate material LiNi_{0.938}Co_{0.031}Mn_{0.031}O₂.
(3) The intermediate material obtained in step (2), Mn(OH)₂, CoO(OH) and LiOH were prepared in a molar ratio of 1:0.02:0.02:0.04, and uniformly mixed by the high-speed mixer at a rotational speed of 900 r/min. After mixing for 20 min, the material hanging on the inner wall of the high-speed mixer was scraped off, and then mixing was further performed for 20 min to obtain a mixed material. The mixed material was roasted at 720 °C for 6 h, where a heating-up rate was 2.5 °C/min, an atmosphere was oxygen, and an oxygen inlet rate was 200 L/min. After cooling, an obtained roasted product was crushed and sieved to obtain a cathode material with an average chemical formula of LiNi_{0.90}Mn_{0.05}Co_{0.05}O₂.

### Comparative Example 4

A preparation method for a cathode material provided in the present comparative example was substantially the same as that in Example 3, but was different in that in step (1), the spherical core-shell precursor was substituted by a spherical precursor Ni_{0.938}Co_{0.031}Mn_{0.031}(OH)₂ (nickel, cobalt and manganese elements were uniformly distributed) in a molar ratio of Ni element : Co element : Mn element = 93.8:3.1:3.1, where a volume median particle size D₅₀ thereof was 11 µm, a specific surface area was 11.8 m²/g, and a tap density was 1.92 g/cm³.

### Comparative Example 5

A preparation method for a cathode material provided in the present comparative example was substantially the same as that in Example 3, but was different in that the roasting in step (2) was: roasting the mixture obtained in step (1) at 755 °C for 16 h, to obtain a roasted product (i.e., without stepwise calcination).

XRD detection was performed on the cathode materials prepared in various examples and various comparative example, and microstrain data were obtained, respectively, and results are as shown in TABLE 1. Specifically, according to XRD data obtained, through further analysis in refinement software Topas based on William-Hall formula, the microstrain of the cathode materials can be derived. In the above, the XRD data of the cathode material prepared in Example 1 and Rietveld refinement results thereof are shown in FIG. 5, and it can be seen that the cathode material has a hexagonal layered structure and has good crystallinity.

Button lithium-ion batteries were prepared with the cathode materials prepared in various examples and various comparative examples respectively, electrochemical performances (first-cycle charge specific capacity, first-cycle discharge specific capacity, first-cycle Coulombic efficiency and capacity retention rate after 100 cycles) of various lithium-ion batteries were tested, and results are as shown in TABLE 1.

In the above, a preparation method for a lithium-ion battery included: mixing the above cathode materials with acetylene black and polyvinylidene fluoride in a mass ratio of 90:6:4, adding a proper amount of N-methylpyrrolidone as a dispersing agent, and grinding into a slurry; and then uniformly coating the slurry on an aluminum foil, vacuum drying at 120 °C for 10 h, rolling the dried plate using a rolling machine, cutting the plate using a slicing machine to obtain a circular plate with a diameter of 1.3 cm, where a loading capacity of the cathode material loaded on the circular plate was controlled at about 15 mg/cm², and assembling a half-battery in a glove box having an argon atmosphere, where a water partial pressure was ≤0.1 ppm, an oxygen partial pressure was ≤0.1 ppm, metal lithium was used as a counter electrode, 1 M LiPF₆ (FEC/EC/DMC, in a volume ratio of 1:1:1) solution was used as an electrolytic solution, and assembly specification was CR2032-type button lithium-ion secondary battery.

Testing method for electrochemical performances included: using a constant-current charging and discharging mode, a capacity test included charging at 0.1 C and discharging at 0.1 C, 2.5-4.3 V, vs. Li⁺/Li; and a cycle test included charging at 0.5 C and discharging at 0.5 C at 45 °C, 2.7-4.25 V vs. Li⁺/Li, and the number of cycles was 100.

**TABLE 1 Test Results of Electrochemical Performances**

| Group | First charge specific capacity (mAh/g) | First discharge specific capacity (mAh/g) | First Coulombic efficiency (%) | Capacity retention rate after 100 cycles (%) | Microstrain (%) |
|---|---|---|---|---|---|
| Example 1 | 243.2 | 229.5 | 94.37 | 91.99 | 0.063 |
| Example 2 | 245.3 | 231.1 | 94.21 | 93.61 | 0.055 |
| Example 3 | 244.4 | 230.3 | 94.23 | 92.89 | 0.052 |
| Example 4 | 242.1 | 229.7 | 94.89 | 93.11 | 0.066 |
| Example 5 | 245.9 | 229.3 | 93.25 | 92.45 | 0.068 |
| Example 6 | 243.8 | 228.8 | 93.84 | 92.55 | 0.062 |
| Comparative Example 1 | 243.0 | 227.8 | 93.74 | 90.57 | 0.022 |
| Comparative Example 2 | 242.6 | 228.5 | 94.19 | 91.36 | 0.046 |
| Comparative Example 3 | 240.5 | 225.7 | 93.85 | 90.10 | 0.073 |
| Comparative Example 4 | 239.7 | 224.9 | 93.82 | 89.77 | 0.077 |
| Comparative Example 5 | 249.5 | 224.3 | 89.90 | 89.33 | 0.079 |

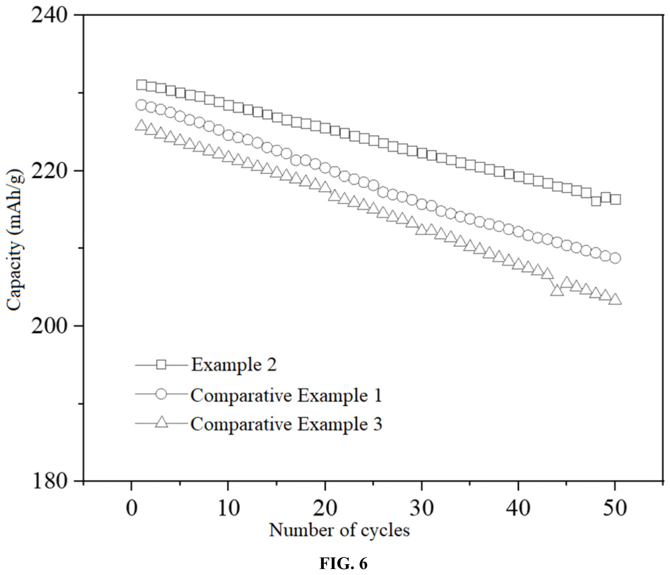

In the above, cycle data of the lithium-ion batteries prepared with the cathode materials of Example 2, Comparative Example 1 and Comparative Example 3 are shown in FIG. 6.

It can be seen from the data in TABLE 1 that:

By comparing Example 1 to Example 3 with Comparative Example 1, Example 1 to Example 3 have higher microstrain, indicating that the core-shell structures of the particles of the cathode materials prepared in various examples are retained.

By comparing Example 1 to Example 3 with Comparative Example 2, it can be seen that the cathode materials obtained by the method of controlling the Mn/Co gradients through secondary sintering (i.e., Example 1 to Example 3) have higher microstrain than the cathode material obtained through conventional primary sintering of the core-shell precursor (i.e. Comparative Example 2), indicating that the core-shell gradient is better retained.

By comparing Example 1 to Example 3 with Comparative Example 1 to Comparative Example 3, Example 1 to Example 3 have more excellent discharge specific capacity and cycle stability in the electrochemical tests, because the difference in the nickel, cobalt and manganese concentration between the core and the shell improves the stability of the cathode materials, and a surface Co-rich structure improves the kinetic performance of the materials.

By comparing Example 2 with Comparative Example 1, Example 2 has a core-shell structure, Comparative Example 1 has a homogeneous structure, and Example 2 has superior capacity and remarkably improved cycle.

Example 2 and Comparative Example 2 both have a core-shell structure, while the core-shell gradient in Example 2 is better retained, so that surfaces of the particles are effectively stabilized, and the cycle performance of the cathode material is improved.

By comparing Example 2 with Comparative Example 3, a solid-phase coating method used in Comparative Example 3 leads to Mn segregation, and capacity and cycle thereof are reduced.

By comparing Example 3 with Comparative Example 4, Comparative Example 4 uses the precursor having a homogeneous structure with uniformly distributed nickel, cobalt and manganese elements, and capacity and cycle performance are reduced.

By comparing Example 3 with Comparative Example 5, the first roasting in Comparative Example 5 is only one-step calcination, which causes reduced capacity and cycle performance.

Although the present invention has been illustrated and described with specific examples, it should be realized that the various examples above are merely used for illustrating the technical solutions of the present invention, rather than limiting the present invention; the skilled in the art should understand that, without departing from the spirit and scope of the present invention, they still could modify the technical solutions described in various preceding examples, or make equivalent substitutions to some or all of the technical features therein; and these modifications or substitutions do not make the corresponding technical solutions essentially depart from the scope of the technical solutions of various examples of the present invention; therefore, it means that the attached claims cover all of these substitutions and modifications within the scope of the present invention.

## Claims

1. A cathode material, **characterized in that** particles of the cathode material have a core-shell structure, wherein the core-shell structure comprises a nickel-rich inner core and a lithium-nickel-cobalt-manganese-oxide outer shell coated on a surface of the nickel-rich inner core,
wherein a nickel element content in the nickel-rich inner core is higher than a nickel element content in the lithium-nickel-cobalt-manganese-oxide outer shell; and
a cobalt element content and a manganese element content in the lithium-nickel-cobalt-manganese-oxide outer shell are higher than a cobalt element content and a manganese element content in the nickel-rich inner core, respectively.

2. The cathode material according to claim 1, wherein the cathode material meets at least one of following conditions:
(1) the nickel element content in the cathode material decreases in a gradient from a particle center to a particle surface;
(2) the cobalt element content in the cathode material increases in a gradient from the particle center to the particle surface;
(3) the manganese element content in the cathode material increases in a gradient from the particle center to the particle surface;
(4) in the cathode material, a difference between a mass fraction of a nickel element at the particle center and a mass fraction of a nickel element at the particle surface is ≥5%;
(5) in the cathode material, a difference between a mass fraction of a cobalt element at the particle surface and a mass fraction of a cobalt element at the particle center is ≥2%; and
(6) in the cathode material, a difference between a mass fraction of a manganese element at the particle surface and a mass fraction of a manganese element at the particle center is ≥3%.

3. The cathode material according to claim 1, wherein the cathode material meets at least one of following conditions:
(1) a diameter of the nickel-rich inner core is 4-16 µm; and
(2) a thickness of the lithium-nickel-cobalt-manganese-oxide outer shell is 0.1-2 µm.

4. The cathode material according to claim 1, wherein an average chemical formula of the nickel-rich inner core is LiNiₓCo_{y}Mn_{1-x-y}O₂, where 0.5<x<1, 0<y<0.5, and x+y<1; and
an average chemical formula of the lithium-nickel-cobalt-manganese-oxide outer shell is LiNiₐCo_{b}Mn_{1-a-b}O₂, where 0<a<x, 1>b>y, and 1-a-b>1-x-y.

5. The cathode material according to claim 1, wherein the cathode material meets at least one of following conditions:
(1) microstrain of the cathode material is ≥0.05%;
(2) a first discharge specific capacity of a lithium-ion battery containing the cathode material is ≥228 mAh/g;
(3) first Coulombic efficiency of the lithium-ion battery containing the cathode material is ≥90%; and
(4) a capacity retention rate of the lithium-ion battery containing the cathode material after 100 cycles is ≥91.5%.

6. A preparation method for the cathode material according to any one of claims 1 to 5, comprising steps of:
performing first mixing and first roasting on a core-shell precursor and a first lithium source, to obtain a surface manganese-rich material, wherein in the core-shell precursor, a nickel element content in a core layer is higher than a nickel element content in a shell layer, and a manganese element content in the core layer is lower than a manganese element content in the shell layer; and
performing second mixing and second roasting on the surface manganese-rich material and a cobalt source, to obtain the cathode material.

7. The preparation method for the cathode material according to claim 6, wherein the preparation method meets at least one of following conditions:
(1) an average chemical formula of the core layer of the core-shell precursor is NiₚCo_{q}Mn_{1-p-q}(OH)₂, where 0.5<p<1, 0≤q<0.5, and p+q<1; and an average chemical formula of the shell layer of the core-shell precursor is Ni_{w}CoₛMn_{1-w-s}(OH)₂, where 0<w<p, s≥q, and 1-w-s>1-p-q;
(2) a diameter of the core layer of the core-shell precursor is 4-16 µm, and a thickness of the shell layer is 0.1-2 µm;
(3) the core-shell precursor has a volume median particle size D₅₀ of 4-18 µm, a specific surface area of 4-20 m²/g, and a tap density of 1.9-2.1 g/cm³;
(4) a molar ratio of a lithium element in the core-shell precursor to a lithium element in the first lithium source is 1:(1-1.07);
(5) the first roasting comprises two-stage calcination, wherein first-step calcination in the two-stage calcination is at a temperature of 300-600 °C for a heat preservation duration of ≥2h; and second-step calcination of the two-stage calcination is at a temperature of 650-850 °C for a heat preservation duration of ≥4 h;
(6) a second lithium source is further added during the second mixing, and a molar ratio of the surface manganese-rich material, a cobalt element in the cobalt source and a lithium element in the second lithium source is 1:(0.002-0.06):(0.0001-0.12); and
(7) the second roasting is at a temperature of 500-800 °C for a heat preservation duration of ≥2 h.

8. A cathode plate, comprising the cathode material according to any one of claims 1 to 5, or a cathode material obtained by the preparation method for the cathode material according to any one of claims 6 to 7.

9. A lithium-ion battery, comprising the cathode plate according to claim 8.

10. An electric device, comprising the lithium-ion battery according to claim 9.
